# FASCICULE DE BREVET EUROPEEN

(11) **EP 1 028 301 B1**
(45) Date de publication et mention de la délivrance du brevet: **16.06.2004**
(21) Numéro de dépôt: 00400168.1
(22) Date de dépôt: 21.01.2000
(51) Int. Cl.: F27D 17/00, C21B 7/00

(54) **Procédé de traitement de gaz sidérurgiques**
Verfahren zur Behandlung von Abgasen in der Stahlindustrie
Exhaust gases treatment process in the iron and steel industry

(30) Priorité: 11.02.1999 FR 9901599
(43) Date de publication de la demande: 16.08.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Avart, Pascal, 77600 Bussy-Saint-Georges (FR); Girard, Jérôme, 92290 Chatenay Malabry (FR); Mure, Geneviève, 75012 Paris (FR); Pousset, Emmanuel, 92160 Antony (FR)
(74) Mandataire: Le Moenner, Gabriel

(56) Documents cités:
- PATENT ABSTRACTS OF JAPAN vol. 005, no. 075 (C-055), 19 mai 1981 (1981-05-19) & JP 56 023207 A (SUMITOMO METAL IND LTD), 5 mars 1981 (1981-03-05)
- PATENT ABSTRACTS OF JAPAN vol. 010, no. 067 (C-333), 15 mars 1986 (1986-03-15) & JP 60 204814 A (JINICHI NISHIWAKI), 16 octobre 1985 (1985-10-16)
- PATENT ABSTRACTS OF JAPAN vol. 011, no. 150 (C-422), 15 mai 1987 (1987-05-15) & JP 61 284508 A (MITSUI ENG & SHIPBUILDING CO LTD), 15 décembre 1986 (1986-12-15)
- PATENT ABSTRACTS OF JAPAN vol. 009, no. 267 (C-310), 24 octobre 1985 (1985-10-24) & JP 60 114512 A (SUMITOMO KINKOZU KOGYO KK)
- PATENT ABSTRACTS OF JAPAN vol. 004, no. 190 (C-037), 26 décembre 1980 (1980-12-26) & JP 55 128509 A (SUMITOMO METAL IND LT), 4 octobre 1980 (1980-10-04)

## Description

La présente invention concerne le traitement des gaz sidérurgiques produits dans les installations de traitement de métaux.

Actuellement les gaz sidérurgiques (gaz de haut fourneaux, gaz de fours à coke, gaz de convertisseurs) sont brûlés dans des chaudières conventionnelles en utilisant de l'air atmosphérique comme comburant. Cet agencement ne permet pas d'atteindre des puissances thermiques et/ou électriques considérables. Plus récemment, il a été proposé de brûler les gaz sidérurgiques dans des turbines à gaz, ce qui impose des traitements préalables onéreux (dépoussiérage, compression à des pressions jusqu'à 30 bars) de ces gaz et l'adaptation en conséquence des compresseurs et chambres de combustion des turbines.

La présente invention a pour objet de proposer un nouveau procédé de traitement de gaz sidérurgiques permettant de les traiter et de les valoriser de façon optimale en les brûlant en post-combustion d'une turbine à gaz et en amont d'une chaudière de récupération, en additionnant ainsi la production d'électricité de la turbine et la production, avec un bon rendement, d'énergie thermique dans la chaudière de récupération.

Pour ce faire, selon une caractéristique de l'invention, le procédé de traitement de gaz sidérurgiques est caractérisé en ce qu'il comprend les étapes d'acheminer le gaz sidérurgique dans au moins une section de combustion entre la sortie de gaz d'une turbine à gaz et l'entrée de gaz d'une chaudière de récupération, et de brûler le gaz sidérurgique dans ladite station de combustion pour produire de la vapeur dans la chaudière de récupération.

Un tel procédé offre par ailleurs une grande souplesse d'utilisation, convenant à des installations où le débit et/ou le pouvoir calorifique du gaz sidérurgique varient grandement.

Ce type de procédé permet également de traiter de forts volumes de gaz sidérurgique et, corrélativement, d'atteindre des puissances installées considérables, dépassant les 200 MW.

Selon d'autres caractéristiques de l'invention :
- le procédé comporte l'étape d'introduire en outre un débit d'air frais au moins localement dans la section de combustion, pour assurer la combustion du gaz sidérurgique
- le procédé comporte l'étape d'introduire en outre un débit de gaz combustible au moins localement dans la section de combustion, pour garantir la combustion du gaz sidérurgique, notamment lorsque son pouvoir calorifique devient très faible.

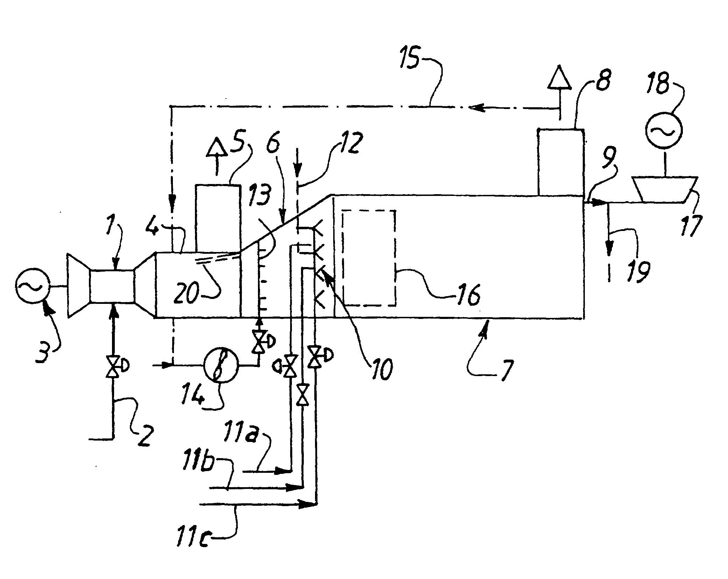

La figure unique représente schématiquement une installation combinée pour la mise en oeuvre d'un procédé selon l'invention.

Sur la figure unique on reconnaît un groupe turbine à gaz 1 alimenté en gaz combustible 2 gazeux ou liquide, par exemple du gaz naturel, et entraînant une génératrice 3 fournissant de l'énergie électrique.

Les gaz d'échappement de la turbine du groupe turbine à gaz 1 sont acheminés dans un conduit pourvu d'une cheminée d'évacuation 5. Toutefois, selon l'invention, le conduit 4 débouche dans une section de post-combustion 6 à profil divergent débouchant à son tour dans la section d'entrée d'une chaudière de récupération 7 pourvue d'une cheminée d'évacuation des gaz 8 et d'un circuit de sortie de vapeur 9.

Dans la section de post-combustion 6 sont disposées des rangées de brûleurs 10 alimentés d'une part par au moins un circuit d'amenée de gaz sidérurgiques 11a, 11b, 11c provenant de diverses installations sidérurgiques, typiquement des haut-fourneaux et/ou des fours à coke. Dans un mode de réalisation particulier, les brûleurs 10 ou des brûleurs auxiliaires de ces derniers, sont susceptibles d'être alimentés en combustible gazeux, typiquement en gaz naturel, par une conduite d'amenée 12.

De plus, selon un aspect de l'invention, la section de post-combustion 6 comporte, en amont des rangées de brûleurs 10, des rampes ou carneaux 13 d'injection de gaz comburant, légèrement comprimé par une soufflante 14. Le gaz comburant est typiquement de l'air atmosphérique et/ou de l'air atmosphérique combiné avec une partie des gaz d'échappement de la chaudière de récupération 7, acheminée par une conduite 15.

Selon un aspect particulier de l'invention, pour tenir compte des fluctuations de débit et de pouvoir calorifique des gaz sidérurgiques injectés dans les brûleurs 10, les faisceaux échangeurs de la chaudière 7, au moins dans la partie avant de cette dernière, sont sélectivement partiellement protégeables par des écrans thermiques 16, par exemple du type à films d'eau.

De façon classique, la vapeur disponible en sortie (9) de la chaudière de récupération 7 est au moins en partie détendue dans une turbine 17 entraînant une génératrice 18, une autre partie 19 de la vapeur étant utilisée pour d'autres process industriels.

Le procédé selon l'invention s'applique à des installations sidérurgiques impliquant de brûler des quantités importantes et variables de gaz sidérurgiques présentant un faible PCI (Pouvoir Calorifique Inférieur), typiquement de l'ordre de 3 500 kJ/Nm³, mais pouvant descendre à des valeurs entre 3 100 et 3 200 kJ/Nm³. Lorsque le PCI devient très bas, le support de flamme des brûleurs 10 est assuré par un débit auxiliaire de gaz naturel 12 correspondant à entre 3 et 10 % de la puissance énergétique des gaz sidérurgiques 11a, b, c.

En cas d'arrêt de la turbine à gaz ou de pics de production de gaz sidérurgiques, la combustion de ces derniers se fait par adjonction d'air ou d'air et de gaz recyclés introduits par les rampes 13 de manière à maintenir à des valeurs faibles les émissions d'oxyde d'azote et de monoxyde de carbone en sortie de la cheminée 8.

Symétriquement, la turbine à gaz 1 peut fonctionner en autonome, sans post-combustion de ces gaz d'échappement, une structure de volets pivotants 20 bloquant l'accès des gaz vers la station de post-combustion 6 et les déviant vers la cheminée propre 5 de la turbine 1.

On donnera maintenant un exemple de réalisation d'une installation pour la mise en oeuvre d'un tel procédé :

La turbine 1 est du type capable de produire une puissance électrique de 70 MWₑ, propulsant dans la section de post-combustion 6 un débit de gaz d'échappement de l'ordre de 200 kg/s à une température entre 500 et 600 °C. Les gaz d'échappement de la turbine ont une teneur résiduaire en oxygène entre 14 et 15 % et une teneur en eau supérieure à 5 %. Les gaz sidérurgiques, à une température typiquement inférieure à 80 °C, sont injectés dans les brûleurs 10 à une pression très faible, inférieure à 1,5 x 10⁵ Pa, typiquement comprise entre 1,05 x 10⁵ Pa et 1,3 x 10⁵ Pa. Ces gaz sidérurgiques, avec un PCI de l'ordre de 3 400 kJ/Nm³ sont essentiellement constitués, à côté d'azote majoritaire, de CO (20 % minimum), et de CO₂ (jusqu'à 20 %), avec une teneur en hydrogène et en eau chacune inférieure à 2 %. La turbine 1 est adaptée pour fournir un débit massique de gaz d'échappement d'au moins 2,5 fois le débit maximum de gaz sidérurgiques, à traiter. Le débit d'air (pur ou mélangé) comburant 13 est, en cas d'arrêt de la turbine, supérieur à 60 %, typiquement environ 70 %, du débit nominal des gaz d'échappement de la turbine.

Le procédé selon l'invention permet de fournir une puissance de post-combustion entre 50 et 200 MWₜₕ, dans des conditions rappelées dans le tableau ci-dessous pour une chaudière de récupération fonctionnant avec une pression de vapeur d'environ 100 x 10⁵ Pa absolus et une température de vapeur de l'ordre de 550 °C.

| Puissance Post-combustion MWth | Température fumées entrée chaudière °C | Débit fumées entrée chaudière kg/s | Débit vapeur kg/s |
|---|---|---|---|
| 50 | 720 | 230 | 50 |
| 200 | 1020 | 290 | 100 |
| 200 (air frais) | 850 | 220 | 60 |

Quoique la présente invention ait été décrite en relation avec des modes de réalisation particuliers, elle ne s'en trouve pas limitées mais est au contraire définie par les revendications. En particulier, selon les volumes et le nombre de sources de gaz sidérurgiques, ces derniers peuvent être brulés dans au moins deux installations du type décrit ci-dessus agissant en parallèle et/ou alternativement.

## Revendications

1. Procédé de traitement de gaz sidérurgiques, **caractérisé en ce qu'**il comprend les étapes d'acheminer le gaz sidérurgique dans au moins une section de combustion (6) entre la sortie de gaz (4) d'une turbine à gaz (1) et l'entrée de gaz d'une chaudière de récupération (7), et de bruler (10) le gaz sidérurgique dans ladite section de combustion (6).

2. Procédé selon la revendication 1, **caractérisé en ce qu'**il comporte l'étape d'introduire en outre un débit d'air (13) au moins localement dans la section de combustion (6) pour assurer la combustion du gaz sidérurgique.

3. Procédé selon la revendication 1 ou la revendication 2, **caractérisé en ce qu'**il comporte l'étape d'introduire en outre un débit de gaz combustible (12) au moins localement dans la section de combustion (6) pour assurer la combustion du gaz sidérurgique.

4. Procédé selon la revendication 3, **caractérisé en ce que** le débit de gaz combustible d'appoint n'excède pas 10 % du débit du gaz sidérurgique.

5. Procédé selon l'une des revendications précédentes, **caractérisé en ce que** le gaz sidérurgique est acheminé dans la structure de combustion à une pression inférieure à 1,3 x 10⁵ Pa.

6. Procédé selon l'une des revendications précédentes, **caractérisé en ce que** le débit de gaz sidérurgique varie entre 15 et 100 kg/s.

7. Procédé selon la revendication 6, **caractérisé en ce que** le débit de gaz d'échappement de la turbine (1) est au moins 2,5 fois le débit maximum de gaz sidérurgique.

8. Procédé selon l'une des revendications 2 à 7, **caractérisé en ce que** le débit d'air est supérieur à 60 % du débit nominal de gaz d'échappement de la turbine (1).

9. Procédé selon l'une des revendications précédentes, **caractérisé en ce que** la combustion des gaz sidérurgiques fournit une puissance thermique comprise entre 40 et 200 MWₜₕ.

10. Procédé selon l'une des revendications précédentes, **caractérisé en ce qu'**il comprend l'étape d'aménager au moins temporairement un écran thermique (16) de protection des sections antérieures d'échange de la chaudière de récupération (7).

## Patentansprüche

1. Verfahren zur Behandlung von Gas aus der Eisen- und Stahlerzeugung, **dadurch gekennzeichnet, dass** es die folgenden Schritte umfasst: Zuführen des Gases aus der Eisen- und Stahlerzeugung in zumindest einen Verbrennungsabschnitt (6) zwischen dem Gasauslass (4) einer Gasturbine und dem Gaseinlass eines Rückgewinnungskessels (7) und das Verbrennen (10) des Gases aus der Eisen- und Stahlerzeugung in dem Verbrennungsabschnitt (6).

2. Verfahren nach Anspruch 1, **dadurch gekennzeichnet, dass** es außerdem den Schritt des zumindest lokalen Einführens eines Durchflusses von Luft (13) in den Verbrennungsabschnitt (6) umfasst, um die Verbrennung des Gases aus der Eisen- und Stahlerzeugung zu gewährleisten.

3. Verfahren nach Anspruch 1 oder Anspruch 2, **dadurch gekennzeichnet, dass** es außerdem den Schritt des zumindest lokalen Einführens eines Durchflusses von brennbarem Gas (12) in den Verbrennungsabschnitt (6) umfasst, um die Verbrennung des Gases aus der Eisen- und Stahlerzeugung zu gewährleisten.

4. Verfahren nach Anspruch 3, **dadurch gekennzeichnet, dass** der Durchfluss des zusätzlichen brennbaren Gases 10% des Durchflusses des Gases aus der Eisen- und Stahlerzeugung nicht überschreitet.

5. Verfahren nach einem der vorhergehenden Ansprüche, **dadurch gekennzeichnet, dass** das Gas aus der Eisen- und Stahlerzeugung in die Verbrennungseinrichtung mit einem Druck kleiner als 1,3 x 10⁵ Pa eingeführt wird.

6. Verfahren nach einem der vorhergehenden Ansprüche, **dadurch gekennzeichnet, dass** der Durchfluss des Gases aus der Eisen- und Stahlerzeugung zwischen 15 und 100 kg/s variiert.

7. Verfahren nach Anspruch 6, **dadurch gekennzeichnet, dass** der Durchfluss von Abgas aus der Turbine (1) zumindest das 2,5-fache des maximalen Durchflusses des Gases aus der Eisen- und Stahlerzeugung beträgt.

8. Verfahren nach einem der Ansprüche 2 bis 7, **dadurch gekennzeichnet, dass** der Durchfluss von Luft größer als 60% des Nenndurchsatzes von Abgas aus der Turbine (1) ist.

9. Verfahren nach einem der vorhergehenden Ansprüche, **dadurch gekennzeichnet, dass** die Verbrennung der Gase aus der Eisen- und Stahlerzeugung eine Wärmeleistung zwischen 40 und 200 MWₜₕ liefert.

10. Verfahren nach einem der vorhergehenden Ansprüche, **dadurch gekennzeichnet, dass** es den Schritt des zumindest zeitweisen Einbringens eines Wärmeschildes (16) zum Schutz der vorderen Austauschabschnitte des Rückgewinnungskessels (7) umfasst.

## Claims

1. Process for the treatment of steelmaking gases, **characterized in that** it comprises the steps of sending the steelmaking gas into at least one combustion section (6) between the gas outlet (4) of a gas turbine (1) and the gas inlet of a recovery boiler (7) and of burning (10) the steelmaking gas in the said combustion section (6).

2. Process according to Claim 1, **characterized in that** it includes the step of furthermore introducing a stream of air (13), at least locally, into the combustion section (6) in order to ensure combustion of the steelmaking gas.

3. Process according to Claim 1 or Claim 2, **characterized in that** it includes the step of furthermore introducing a stream of combustible gas (12), at least locally, into the combustion section (6) in order to ensure combustion of the steelmaking gas.

4. Process according to Claim 3, **characterized in that** the flow rate of additional combustible gas does not exceed 10% of the flow rate of the steelmaking gas.

5. Process according to one of the preceding claims, **characterized in that** the steelmaking gas is sent into the combustion structure at a pressure of less than 1.3 × 10⁵ Pa.

6. Process according to one of the preceding claims, **characterized in that** the flow rate of steelmaking gas varies between 15 and 100 kg/s.

7. Process according to Claim 6, **characterized in that** the flow rate of exhaust gas from the turbine (1) is at least 2.5 times the maximum flow rate of steelmaking gas.

8. Process according to one of Claims 2 to 7, **characterized in that** the flow rate of air is greater than 60% of the nominal flow rate of exhaust gas from the turbine (1).

9. Process according to one of the preceding claims, **characterized in that** the combustion of the steelmaking gases delivers a thermal power of between 40 and 200 MWₜₕ.

10. Process according to one of the preceding claims, **characterized in that** it includes the step of providing, at least temporarily, a heat screen (16) for protecting the front exchange sections of the recovery boiler (7).
